# EUROPÄISCHE PATENTSCHRIFT

(11) **EP 0 525 603 B1**
(45) Veröffentlichungstag und Bekanntmachung des Hinweises auf die Patenterteilung: **18.10.1995**
(21) Anmeldenummer: 92112482.2
(22) Anmeldetag: 21.07.1992
(51) Int. Cl.: C01B 21/14

(54) **Verfahren zur Herstellung von Hydroxylammoniumsalzen**
Process for the preparation of hydroxyl ammonium salts
Procédé de préparation de sels d'hydroxyl ammonium

(30) Priorität: 02.08.1991 DE 4125599
(43) Veröffentlichungstag der Anmeldung: 03.02.1993
(73) Patentinhaber: BASF Aktiengesellschaft, 67063 Ludwigshafen (DE)
(72) Erfinder: Fuchs, Hugo, Dr., W-6700 Ludwigshafen (DE); Weiss, Franz-Josef, Dr., W-6708 Neuhofen (DE); Ritz, Josef, Dr., W-6700 Ludwigshafen (DE)

(56) Entgegenhaltungen:
- DE-A- 287 952
- DE-C- 956 038

## Beschreibung

Hydroxylammoniumsalze werden in großtechnischem Maßstab durch Reduktion von Stickstoffmonoxid mit Wasserstoff in Gegenwart von suspendierten Platinkatalysatoren in wäßrigen Mineralsäuren hergestellt . Es wurden schon viele Versuche unternommen, die Aktivität des verwendeten Platinkatalysators so zu beeinflussen, daß die Reduktion von Stickstoffmonoxid unter Bildung von Hydroxylammoniumsalzen unter Verbesserung der Selektivität verläuft und eine Reduktion zu den Nebenprodukten wie Ammoniumsalzen oder Distickstoffoxid vermindert wird.

Aus der DE-PS 956 038 ist bereits bekannt, daß man Platinkatalysatoren mit vergiftenden Mitteln wie Schwefel, Selen, Tellur, Arsen, Antimon oder Wismut versieht, um die Bildung von Hydroxylammoniumsalzen zu bevorzugen. Die erzielten Selektivitäten lassen jedoch sehr zu wünschen übrig und darüber hinaus wird auf die Bildung von Distickstoffmonoxid kein Hinweis gegeben.

Nach einem in der US-PS 3 856 924 beschriebenen Verfahren verwendet man bei der Herstellung von Hydroxylammoniumnitrat einen mit Schwefel vergifteten Platinkatalysator. Hierbei wird zwar die Selektivität auf 86,5 % verbessert, der Gehalt an Distickstoffmonoxid im Abgas beträgt jedoch 15,5 % (v/v).

Es war deshalb die technische Aufgabe gestellt, ein Verfahren zur Herstellung von Hydroxylammoniumsalzen durch katalytische Reduktion von Stickstoffmonoxid zur Verfügung zu stellen, das bei möglichst hoher Selektivität eine Minimierung an Nebenprodukten wie Ammoniumsalzen und Distickstoffmonoxid ermöglicht.

Diese Aufgabe wird gelöst in einem Verfahren zur Herstellung von Hydroxylammoniumsalzen durch Reduktion von Stickstoffmonoxid mit Wasserstoff in verdünnten wäßrigen Mineralsäuren in Gegenwart von suspendierten Platin-Trägerkatalysatoren, die partiell mit Arsen vergiftet sind, bei erhöhter Temperatur, wobei man Katalysatoren verwendet, die durch gemeinsames Fällen von metallischem Platin aus wäßrigen Lösungen von Platinverbindungen in Gegenwart von oxidischen Arsenverbindungen mittels Reduktionsmitteln auf suspendierte Träger erhalten worden sind.

Das neue Verfahren hat den Vorteil, daß man eine Beeinträchtigung der Selektivität, einen Anfall von Ammoniumverbindungen und die Bildung von Distickstoffmonoxid möglichst niedrig hält.

In der Regel hält man ein Molverhältnis von Wasserstoff : Stickstoffmonoxid von 1,5:1 bis 6:1 ein. Besonders gute Ergebnisse erhält man, wenn man darauf achtet, daß in der Reaktionszone ein Molverhältnis von Wasserstoff : Stickstoffmonoxid von 3,5-5:1 aufrechterhalten wird.

Vorteilhaft verwendet man als Säuren starke Mineralsäuren wie Chlorwasserstoffsäure, Salpetersäure, Schwefelsäure oder Phosphorsäure. Geeignet sind auch deren saure Salze wie Ammoniumbisulfat. Besonders bevorzugt wird Schwefelsäure, Ammoniumbisulfat oder Salpetersäure verwendet. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei Temperaturen von 30 bis 80°C durch. Besonders bewährt haben sich Temperaturen von 40 bis 60°C. In der Regel führt man die Umsetzung bei Atmosphärendruck oder erhöhtem Druck z.B. bis zu 30 bar durch. Besonders bewährt hat sich die erfindungsgemäße Arbeitsweise, wenn man die Umsetzung unter erhöhtem Druck durchführt z.B. von 1,5 bis 20 bar.

Die Umsetzung wird in Gegenwart von Platinträgerkatalysatoren durchgeführt. Besonders bewährt hat sich Platin auf Kohleträger z.B. Aktivkohle insbesondere Graphit. Vorzugsweise hat ein solcher Trägerkatalysator einen Gehalt von 0,1 bis 5 Gew.-% Platin insbesondere von 0,3 bis 0,6 Gew.-% Platin. Man verwendet vorteilhaft Platinträgerkatalysatoren deren Anteile mit einer Korngröße < 10 µm weniger als 10 Gew.-% betragen. Vorzugsweise wir ein Platinträgerkatalysator mit einer Korngröße von 30 bis 90 µm verwendet. Die Feinanteile des Katalysators können unschwer durch geeignete Maßnahmen, z.B. Sieben, entfernt werden.

Die verwendeten Platinträgerkatalysatoren sind partiell mit Arsen vergiftet. Vorteilhaft beträgt der Arsengehalt 1 bis 50 Atom-%, insbesondere 3 bis 30 Atom-%, bezogen auf das eingesetzte Platinmetall.

Erfindungsgemäß verwendet man Katalysatoren, die durch Fällen von metallischem Platin aus wäßrigen Lösungen von Platinverbindungen, die zusätzlich oxidische Arsenverbindungen enthalten, mittels Reduktionsmitteln auf suspendierte Katalysatorträger, insbesondere Graphit, erhalten worden sind. In der Regel geht man hierbei von wäßrigen Lösungen von Hexachloroplatinsäure oder Tetrachloroplatinsäure oder deren Salzenaus. Solchen wäßrigen Lösungen setzt man oxidische Arsenverbindungen z.B. Arsentrioxid oder Arsenpentoxid, insbesondere Arsentrioxid zu. Vorteilhaft sind die Arsenverbindungen in der genannten wäßrigen Lösung gelöst. Es hat sich bewährt, wenn man die Lösung vor der Weiterverarbeitung auf einen pH-Wert von 4,6 bis 6 z.B. durch Zugabe von Alkalihydroxid einstellt. Vorzugsweise wird die Lösung auf den genannten pH-Wert gepuffert z.B. durch zusätzliche Zugabe von Alkaliacetaten.

Der anzuwendende Katalysatorträger wird in der Platin und Arsen enthaltenen Lösung suspendiert. Das Einbringen des Katalysatorträgers kann von Anfang an erfolgen oder vor dem Ausfällen des löslichen Platins mit Reduktionsmitteln. Es hat sich als vorteilhaft erwiesen, den Träger von Anfang an in der Platin enthaltenen wäßrigen Lösung zu suspendieren. Metallisches Platin wird auf dem Träger mittels Reduktionsmitteln, die Platin bis zu metallischem Platin reduzieren, ausgefällt. Geeignete Reduktionsmittel sind beispielsweise Hydrazin, Formaldehyd oder insbesondere Ameisensäure. Vorteihaft verwendet man je Gramm-Atom Platin 100 bis 1000 Mol Reduktionsmittel an. Zweckmäßig hält man bei der Reduktion zu metallischem Platin eine Temperatur von 60 bis 90°C ein. Nach beendeter Reduktion wird der suspendierte Katalysator abfiltriert und zweckmäßig mit Wasser ausgewaschen. Es hat sich besonders bewährt, wenn man den Katalysator anschließend mit Alkanolen mit 1 bis 5 Kohlenstoffatomen, z.B. Methanol, Ethanol, Propanol oder i-Propanol, z.B. bei einer Temperatur von 10 bis 40°C, insbesondere bei Raumtemperatur 5 bis 60 Minuten behandelt, anschließend den Alkohol abtrennt, z.B. durch Filtration, und dann den Katalysator nochmals mit Wasser wäscht.

Bei der Herstellung von Hydroxylammoniumnitrat hat es sich besonders bewährt, wenn man den Katalysator vor Beginn der Reaktion in Wasser suspendiert, mit Wasserstoff behandelt und während der Umsetzung eine Konzentration an Salpetersäure zwischen 1 und 2 Äquivalenten/Liter durch Zugeben von Salpetersäure einhält und am Schluß der Reaktion die Konzentration an freier Säure auf 0,2 bis 0,3 normal abfallen läßt.

Hydroxylammoniumsalze eignen sich zur Herstellung von Oximen z.B. Cyclohexanonoxim, einem wichtigen Ausgangsstoff für Caprolactam.

Das Verfahren nach der Erfindung sei an folgenden Beispielen veranschaulicht.

### Beispiel 1

A) Katalysatorherstellung
   640 g Graphit werden bei Raumtemperatur mit 10 %iger HNO₃ 2-mal gereinigt, getrocknet, dann mit 500 ml Wasser, 75 ml Königswasser und 34 g H₂ (PtCl₆) · 6H₂O (12,8 g Platin) über Nacht, bei 80°C, unter Stickstoffabdeckung gerührt.
   Am nächsten Tag wird mit 400 ml H₂O verdünnt, erneut auf 80°C aufgeheit, 1,69 g Arsentrioxid (1,28 g Arsen) zugesetzt, mit Soda neutralisiert bis pH = 5,2 und mit Natriumacetat gepuffert. Anschließend wird durch Zugabe von 240 ml 99 %iger Ameisensäure das Platin auf dem Graphitträger niedergeschlagen, der fertige Katalysator abfiltriert und mit Wasser neutral gewaschen. Anschließend wird der Katalysator 30 Minuten bei Raumtemperatur mit iso-Propanol gerührt, abfiltriert und mit Wasser nachgewaschen.
B) Herstellung von Hydroxylammoniumnitrat-Lösung
   Von dem auf diese Weise hergestellten Platin-Graphit-Katalysator werden 180 g, in einem Edelstahl-Rührkessel, in 3500 ml destilliertem Wasser suspendiert. Nach der Aktivierung des Katalysators mit H₂ bei 40°C werden 400 ml 65 %ige HNO₃ zugegeben und unter Rühren stündlich 175 Liter i.N. eines Gemisches aus 63 % (v/v) H₂ (99,9 %ig) und 37 % (v/v) NO (99,5 %ig, Rest N₂) eingeleitet. Die Reaktionstemperatur beträgt 40 - 42°C. Durch Zugabe von weiteren 800 ml 65 %iger HNO₃ wird eine Konzentration an freier Säure von 1,3 bis 1,5 normal aufrechterhalten.
   Nach Einleitung von insgesamt 670 Liter i.N. des NO/H₂-Gemisches werden 4,6 Liter einer Hydroxylammoniumnitrat-Lösung erhalten mit 31,5 g/l freier HNO₃, 65,0 g/l NH₂OH (als NH₃OHNO₃) und 0,7 g/l NH₃, gebunden als NH₄NO₃. Es werden insgesamt 162 Liter i.N. Abgas erhalten mit 82,8 % (v/v) H₂, 13,4 % (v/v) NO, 2,3 % (v/v) N₂O und 1,5 % (v/v) N₂.
   Die Selektivität wird über das umgesetzte NO berechnet und beträgt 91,7 % für Hydroxylamin.

### Beispiel 2

A) Katalysatorherstellung
   Der Platin/Arsen-Katalysator wurde hergestellt wie in Beispiel 1 beschrieben.
B) Herstellung von Hydroxylammoniumsulfat-Lösung
   In einem Rührkessel aus Glas werden 50 g des Platin-Arsen-Katalysators in 1250 ml 4,3 normaler Schwefelsäure suspendiert. Nach der Aktivierung mit Wasserstoff bei 40°C werden stündlich 65 Liter i.N. eines Gemisches aus 63 % (v/v) H₂ (99,9 %ig) und 37 % (v/v) NO (99,5 %ig, Rest Stickstoff) eingeleitet. Die Reaktionstemperatur wird bei 40 - 41°C gehalten. Nach Einleitung von insgesamt 200 Liter i.N. des NO/H₂-Gemisches werden 1,33 Liter einer Hydroxylammoniumsulfat-Lösung erhalten mit 104,9 g/l freier H₂SO₄, 62,0 g/l NH₂OH (als NH₃OH)₂SO₄) und 0,36 g/l NH₃, gebunden als (NH₄)₂SO₄. Es werden insgesamt 50 Liter Abgas erhalten mit 79,2 % v/v) H₂, 19,2 % (v/v) NO, 1,2 % (v/v) N₂O, der Rest besteht aus Stickstoff. Die Selektivität wird über das umgesetzte Stickoxid berechnet und beträgt 96,5 % für NH₂OH.

### Beispiel 3 (Vergleichsbeispiel)

A) Katalysatorherstellung
   640 g Graphit werden bei Raumtemperatur mit 10 %iger Salpetersäure 2 x gereinigt, getrocknet, dann mit 500 ml Wasser, 75 ml Königswasser und 8,5 g H₂ (PtCl₆) · 6 H₂O (3,2 g Platin) über Nacht bei 80°C, unter Stickstoffbedeckung gerührt.
   Am nächsten Tag wird mit 400 ml Wasser verdünnt, erneut auf 80°C aufgeheizt, mit Soda neutralisiert bis pH = 5,2 und mit Natriumacetat gepuffert. Danach wird mit Natriumdithionit-Lösung Pt⁴⁺ zu Pt²⁺ reduziert, zuzüglich eines Überschusses von 15 % der zur Platinreduktion angewandten Menge.
   Anschließend wird mit 100 ml 99 %iger Ameisensäure das Platin auf dem Graphit niedergeschlagen, der fertige Katalysator abfiltriert und mit Wasser neutral gewaschen.
B) Herstellung von Hydroxylammoniumsulfat-Lösung
   In einem Rührkessel aus Edelstahl werden 200 g des Platin-Graphit-Katalysators in 5000 ml 4,3 normaler Schwefelsäure suspendiert. Nach der Aktivierung mit Wasserstoff bei 40°c werden stündlich 212 Liter i.N. eines Gemisches aus 63 % (v/v) H₂ (99,9 %ig) und 37 % (v/v) NO (99,5 %ig, Rest Stickstoff) eingeleitet. Die Reaktionstemperatur wird bei 40 - 42°C gehalten. Nach Einleitung von insgesamt 848 Liter i.N. des NO/H₂-Gemisches werden 5,3 Liter einer Hydroxylammoniumzulfat-Lösung erhalten mit 90,9 g/l freier H₂SO₄, 62,0 g/l NH₂OH (als (NH₃OH)₂SO₄) und 3,57 g/l NH₃, gebunden als (NH₄)₂SO₄. Es werden insgesamt 192 Liter Abgas erhalten mit 77,8 % (v/v) H₂, 17,0 % (v/v) NO, 1,9 % (v/v) N₂O, der Rest besteht aus Stickstoff. Die Selektivität wird über das umgesetzte Stickoxid berechnet und beträgt 89,2 % für NH₂OH.

## Patentansprüche

1. Verfahren zur Herstellung von Hydroxylammoniumsalzen durch Reduktion von Stickstoffmonoxid mit Wasserstoff in verdünnten wäßrigen Mineralsäuren in Gegenwart von suspendierten partiell mit Arsen vergifteten Platinträgerkatalysatoren bei erhöhter Temperatur, dadurch gekennzeichnet, daß man Katalysatoren verwendet, die durch Fällen von metallischem Platin aus wäßrigen Lösungen von Platinsalzen in Gegenwart einer oxidischen Arsenverbindung mittels Reduktionsmitteln auf suspendierte Träger erhalten worden sind.

2. Verfahren nach Anspruch 1, dadurch gekennzeichnet, daß man 1 bis 50 Atom-% Arsen, bezogen auf metallisches Platin anwendet.

3. Verfahren nach den Ansprüchen 1 und 2, dadurch gekennzeichnet, daß man die wäßrige Platinlösung vor der Reduktion auf einen pH-Wert von 4,6 bis 6 puffert.

4. Verfahren nach den Ansprüchen 1 bis 3, dadurch gekennzeichnet, daß man als Reduktionsmittel Ameisensäure verwendet.

5. Verfahren nach den Ansprüchen 1 bis 4, dadurch gekennzeichnet, daß man den Katalysator mit Alkanolen mit 1 bis 5 Kohlenstoffatomen behandelt.

## Claims

1. A process for preparing hydroxylammonium salts by reduction of nitrogen monoxide with hydrogen in dilute aqueous mineral acids in the presence of suspended supported platinum catalysts which are partially poisoned with arsenic, at elevated temperature, wherein catalysts which have been obtained by precipitating metallic platinum from aqueous solutions of platinum salts in the presence of an oxidic arsenic compound using reducing agents onto suspended supports are used.

2. A process as claimed in claim 1, wherein from 1 to 50 atom % arsenic based on metallic platinum are used.

3. A process as claimed in either of claims 1 and 2, wherein the aqueous platinum solution is buffered to a pH of from 4.6 to 6 before the reduction.

4. A process as claimed in any of claims 1 to 3, wherein formic acid is used as reducing agent.

5. A process as claimed in any of claims 1 to 4, wherein the catalyst is treated with alkanols having 1 to 5 carbon atoms.

## Revendications

1. Procédé de préparation de sels d'hydroxylammonium par réduction de monoxyde d'azote avec de l'hydrogène dans des acides minéraux aqueux dilués, en présence de catalyseurs sur support au platine, partiellement dopés avec de l'arsenic et mis en suspension, à température élevée, caractérisé en ce que l'on utilise des catalyseurs qui ont été obtenus par précipitation de platine métallique a partir de solutions aqueuses de sels de platine, en présence d'un composé de l'arsenic a l'état oxydé, au moyen d'agents de réduction, sur des supports mis en suspension.

2. Procédé selon la revendication 1, caractérisé en ce que l'on utilise 1 à 50% en atomes d'arsenic par rapport au platine métallique.

3. Procédé selon la revendication 1 ou 2, caractérisé en ce qu'avant la réduction, on tamponne à un pH de 4,6 à 6 la solution aqueuse de platine.

4. Procédé selon l'une quelconque des revendications 1 à 3, caractérisé en ce que l'on utilise de l'acide formique comme agent de réduction.

5. Procédé selon l'une quelconque des revendications 1 à 4, caractérisé en ce que l'on traite le catalyseur par des alcanols ayant 1 à 5 atomes de carbone.
